# EUROPÄISCHE PATENTSCHRIFT

(11) **EP 1 426 862 B1**
(45) Veröffentlichungstag und Bekanntmachung des Hinweises auf die Patenterteilung: **07.06.2006**
(21) Anmeldenummer: 03023526.1
(22) Anmeldetag: 15.10.2003
(51) Int. Cl.: G06F 11/16

(54) **Synchronisation der Datenverarbeitung in redundanten Datenverarbeitungseinheiten eines Datenverarbeitungssystems**
Synchronization of data processing within redundant processing elements of a data processing system
Synchronisation de traitement de données dans des unités de traitement redondantes d'un système de traitement de données

(30) Priorität: 07.11.2002 DE 10251912
(43) Veröffentlichungstag der Anmeldung: 09.06.2004
(73) Patentinhaber: SIEMENS AKTIENGESELLSCHAFT, 80333 München (DE)
(72) Erfinder: Grosch, Thomas, 90513 Zirndorf (DE)

(56) Entgegenhaltungen:
- WO-A-01/46805
- WO-A-93/25966
- US-A- 5 146 589
- US-A1- 2002 010 880

## Beschreibung

Die Erfindung betrifft ein Verfahren zur Synchronisation der Datenverarbeitung in mindestens zwei redundanten Datenverarbeitungseinheiten eines Datenverarbeitungssystems und ein Datenverarbeitungssystem mit einer Mehrzahl von Datenverarbeitungseinheiten, die mittels einer Datenübertragungseinheit miteinander verbunden sind, z. B. eine speicherprogrammierbare Steuerung zur Automatisierung einer technischen Anlage, insbesondere einer Maschine, einer Fertigungs- oder Kraftwerksanlage.

Datenverarbeitungsanlagen finden vielseitige Anwendung im Rahmen von industriellen Automatisierungsprozessen. Dabei sind in komplexen technischen Anlagen eine Mehrzahl von Datenverarbeitungseinheiten zu aufwendigen Computer- und Datennetzen über mindestens eine Datenübertragungseinheit verbunden. Zur Erhöhung der Verfügbarkeit des Datenverarbeitungssystems werden die Datenverarbeitungseinheiten und/oder die Datenübertragungseinheiten redundant ausgeführt. Bei einer so genannten Systemredundanz wird dabei die Verfügbarkeit des gesamten Datenverarbeitungssystems erhöht, indem insbesondere sicherheitsrelevante Datenverarbeitungseinheiten und andere Komponenten, wie z. B. dezentrale Steuerungen, Drucker, redundant ausgeführt sind. Dabei können übliche Automatisierungssysteme mit herkömmlicher Hardwarestruktur den hohen Verfügbarkeitsanforderungen nicht genügen. Aus diesem Grund werden spezielle hochverfügbare Automatisierungs- oder Datenverarbeitungssysteme verwendet, welche im allgemeinen zwei software- und hardwareidentische Datenverarbeitungseinheiten zur parallelen Verarbeitung von gleichen Automatisierungsaufgaben umfassen. Fällt eine der beiden Datenverarbeitungseinheiten aus, so ist die zweite Datenverarbeitungseinheit in der Lage, die Automatisierungsaufgabe weiterhin auszuführen.

Dies bedingt, dass beide Datenverarbeitungseinheiten zu jedem Zeitpunkt den gleichen Verarbeitungszustand aufweisen. Hierzu werden die beiden Datenverarbeitungseinheiten üblicherweise synchronisiert.

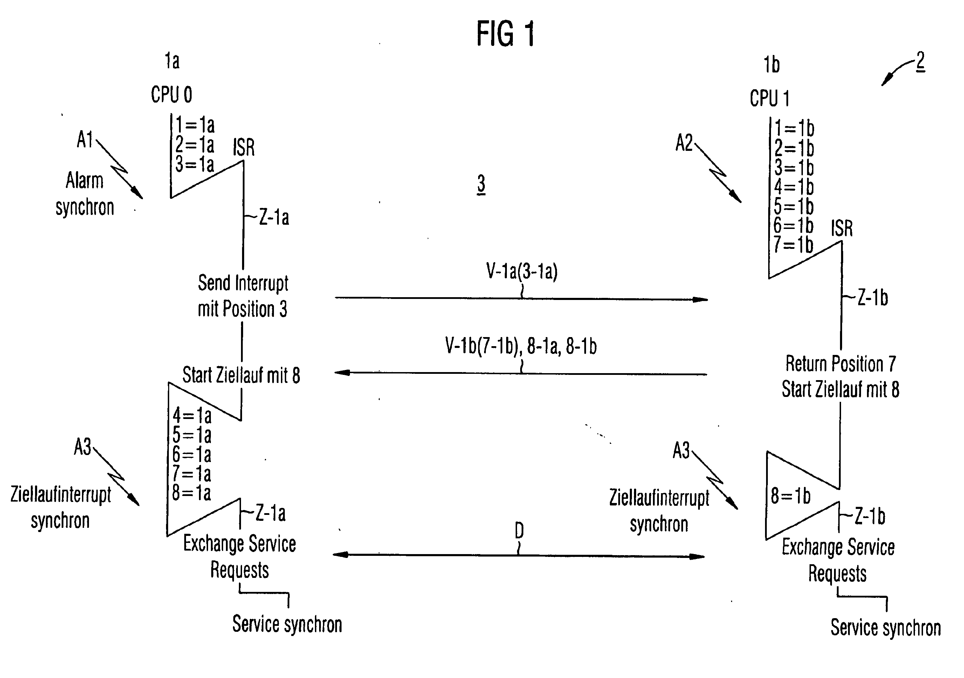

Dazu wird, wie in der Figur 1 dargestellt, die Synchronisation von zwei Datenverarbeitungseinheiten 1a und 1b eines redundant ausgebildeten Datenverarbeitungssystems 2 anhand eines Ablaufplans näher erläutert. Beide Datenverarbeitungseinheiten 1a und 1b sind über eine Datenübertragungseinheit 3 insbesondere zur Synchronisationsverbindung miteinander verbunden. Zur Steuerung einer technischen Anlage laufen auf den beiden Datenverarbeitungseinheiten 1a und 1b identische Ausführungseinheiten 1-1a bis n-1a bzw. 1-1b bis n-1b ab. Beispielsweise wird für die Datenverarbeitungseinheit 1a ein Synchronisationszyklus Z-1a (auch ISR = Interrupt Service Routine genannt) durch eine Applikationssoftware oder Ausführungseinheit 3-1a (auch Task genannt) anhand eines asynchronen Alarms A1 ausgelöst. Im Synchronisationszyklus Z-1a der anfragenden Datenverarbeitungseinheit 1a wird zunächst deren Verarbeitungszustand V-1a anhand der derzeit aktivierten Ausführungseinheit 3-1a bestimmt. Beispielsweise wird die Ausführungseinheit 3-1a anhand der Anzahl von ausgeführten Befehlen über einen hardwaremäßig ausgebildeten Befehlszähler bestimmt. Dieser aktuelle Verarbeitungszustand V-1a der Datenverarbeitungseinheit 1a wird über die Datenübertragungseinheit 3 an die korrespondierende oder redundante Datenverarbeitungseinheit 1b übertragen. Mittels des anhand des Synchronisationszyklus Z-1a übertragenen Verarbeitungszustands V-1a wird nun in der Datenverarbeitungseinheit 1b ebenfalls ein zugehöriger Synchronisationszyklus Z-1b anhand eines Alarms A2 ausgelöst. Anhand des betreffenden Synchronisationszyklus Z-1b wird nun der Verarbeitungszustand V-1b, d. h. die Ausführungseinheit 7-1b, der Datenverarbeitungseinheit 1b bestimmt.

Des Weiteren wird anhand des Synchronisationszyklus Z-1b eine beiden Datenverarbeitungseinheiten 1a und 1b zugrundeliegende zukünftige Ausführungseinheit 8-1a und 8-1b bestimmt und als so genannter Ziellaufpunkt zur Synchronisation definiert. Dabei wird der aktuelle Verarbeitungszustand V-1b der empfangenden Datenverarbeitungseinheit 1b anhand der aktuellen Ausführungseinheit 7-1b und der Ziellaufpunkt, d. h. die gemeinsame nächste Ausführungseinheit 8-1a und 8-1b, an die anfragende Datenverarbeitungseinheit 1a übertragen. Haben beide Datenverarbeitungseinheiten 1a und 1b den Verarbeitungsschritt oder die Ausführungseinheit 8-1a bzw. 8-1b erreicht, wird synchron ein auch Ziellaufinterrupt genannter Alarm A3 ausgelöst.

Beim Auftreten des Alarms A3 befinden sich somit die beiden Datenverarbeitungseinheiten 1a und 1b in der gleichen Ausführungseinheit 8-1a bzw. 8-1b. Falls mit Auftreten des Alarms A3 Daten D von der Datenverarbeitungseinheit 1b in die Datenverarbeitungseinheit 1a oder umgekehrt zu übertragen sind, werden diese nun übertragen. Darüber hinaus werden im Synchronisationszyklus Z-1a, Z-1b mittels einer Systemverwaltung die zur Bearbeitung des Alarms A3 erforderlichen Aufgaben auf beiden Datenverarbeitungseinheiten 1a und 1b ausgeführt. Die vorher aktive Ausführungseinheit 8-1a bzw. 8-1b wird anschließend auf beiden Datenverarbeitungseinheiten 1a und 1b im gleichen Verarbeitungszustand V ausgeführt und/oder beendet. Hierdurch werden neu in das Datenverarbeitungssystem 2 eingebrachte Daten D auf beiden Datenverarbeitungseinheiten 1a und 1b in der gleichen Art und Weise verarbeitet, d. h. beide Datenverarbeitungseinheiten 1a und 1b sind synchronisiert.

Nachteilig dabei ist, dass ein derartiges Synchronisationsverfahren bedingt durch die Applikations- und Systemabhängigkeit und aufgrund von Laufzeitunterschieden oder unterschiedlicher Reihenfolge der Ausführungseinheiten zu Dateninkonsistenzen führen kann. Beispielsweise kann es bei einem Zugriff auf gemeinsam genutzte Speicherbereiche von beiden Datenverarbeitungseinheiten in nicht gleicher Reihenfolge durch die betreffenden Ausführungseinheiten dazu kommen, dass beide Ausführungseinheiten den gleichen Datenbereich, insbesondere dessen Inhalt ändern, so dass die Datenverarbeitungseinheiten unterschiedliche Verarbeitungszustände aufweisen. Die Forderung bei einem hochverfügbaren Datenverarbeitungssystem, dass beide Datenverarbeitungseinheiten zu jedem Zeitpunkt im gleichen Zustand sein müssen, ist somit nicht mehr sichergestellt.

Die US 2002/0010880 A1 beschreibt ein fehlertolerantes Multiprozessor-Computersystem, welches eine Anzahl an Verarbeitungseinheiten aufweist. Mindestens eine der Verarbeitungseinheiten ist asynchron zu einer zweiten Verarbeitungseinheit betreibbar. Ein Monitor ist angeschlossen, um Ausgangssignale von den Verarbeitungseinheiten zu empfangen und um fehlerhafte Operationen dieser Einheiten zu identifizieren. Der Monitor ist ebenso nutzbar, um den Betrieb der Verarbeitungseinheiten zu synchronisieren, indem der Empfang von Ausgangssignalen von Verarbeitungseinheiten an die anderen Verarbeitungseinheiten signalisiert wird. Der Monitor puffert die Ausgangssignale der Verarbeitungseinheiten und gibt diese Signale selektiv an einen externen Bus weiter. Eine Verarbeitungseinheit kann dabei einen oder mehrere Prozessoren aufweisen.

Der Erfindung liegt daher die Aufgabe zugrunde, ein Verfahren zur Synchronisation der Datenverarbeitung von mindestens zwei redundanten Datenverarbeitungseinheiten eines Datenverarbeitungssystems anzugeben, bei dem die Synchronisation der Datenverarbeitungseinheiten ohne Einfluss auf den Ablauf der Datenverarbeitung ausgeführt wird.

Die Aufgabe wird erfindungsgemäß gelöst durch ein Verfahren zur Synchronisation der Datenverarbeitung in mindestens zwei redundanten Datenverarbeitungseinheiten eines Datenverarbei tungssystems, bei dem die Daten in der jeweiligen Datenverarbeitungseinheit parallel mittels einer oder mehrerer Ausführungseinheiten verarbeitet werden, wobei mehreren auf gleiche Daten zugreifenden Ausführungseinheiten eine Synchronisationseinheit zugeordnet wird, welche in einen Synchronisationsbereich und einen gemeinsamen Speicherbereich unterteilt ist, wobei in einer der Datenverarbeitungseinheiten die Daten mittels einer der Ausführungseinheiten in dem gemeinsamen Speicherbereich derart aufgerufen werden, dass vor dem Zugriff der betreffenden Ausführungseinheit auf den gemeinsamen Speicherbereich mittels der Synchronisationseinheit im Synchronisationsbereich eine Zugriffsbestätigungsanfrage an die korrespondierende Synchronisationseinheit der anderen Datenverarbeitungseinheit gesendet wird, wobei anhand eines Vergleichs einer die anfragende Ausführungseinheit repräsentierenden Identifikationsnummer mit der Identifikationsnummer der emp fangenen Ausführungseinheit der anderen Datenverarbeitungseinheit der Zugriff freigegeben oder gesperrt wird.

Die Erfindung geht dabei von der Überlegung aus, dass eine Synchronisation der beiden Datenverarbeitungseinheiten für eine hinreichend genaue und sichere Datenkonsistenz nur dann ausgeführt werden sollte, wenn beide Datenverarbeitungseinheiten sich im gleichen Verarbeitungszustand befinden. Insbesondere bei einem redundant ausgeführten Automatisierungs- oder Datenverarbeitungssystem, bei dem gleichzeitig in beiden Datenverarbeitungseinheiten mittels Ausführungseinheiten identische Steuerungs- und Regelungsfunktionen ablaufen, kann es aufgrund von Verzögerungen in der Datenverarbeitung einer der beiden Datenverarbeitungseinheiten zu einem zeitlich versetzten Zugriff von Ausführungseinheiten auf gleiche Daten kommen. Dies führt zu Inkompatibilitäten zwischen den gleiche Daten aufweisenden Datenverarbeitungseinheiten oder Automatisierungsgeräten. Um dies zu vermeiden, sollten einzelne Zugriffe der Ausführungseinheiten oder Tasks auf gleiche Daten in einem gemeinsamen Speicherbereich überwacht und gesteuert werden. Hierzu ist für mehrere auf gleiche Daten zugreifende Ausführungseinheiten eine gemeinsame Synchronisationseinheit vorgesehen, welche in einen Synchronisationsbereich und einen gemeinsamen Speicherbereich für die gleichen Daten unterteilt ist. Dabei ist je redundanter Datenverarbeitungseinheit jeweils eine Synchronisationseinheit für die betreffenden Ausführungseinheiten vorgesehen. Mittels der Synchronisationseinheit wird anhand einer die jeweilige Ausführungseinheit repräsentierenden Identifikationsnummer die korrespondierende und somit redundante Ausführungseinheit der anderen Datenverarbeitungseinheit identifiziert und anschließend ein Datenzugriff freigegeben. Eine derartige separate Synchronisationseinheit ermöglicht eine übergeordnete, d. h. von den Ausführungseinheiten entkoppelte Synchronisationsfunktion.

Zur sicheren Identifizierung der auf die gleichen Daten zugreifenden Ausführungseinheiten beider Datenverarbeitungseinheiten wird die Identifikationsnummer zeit- und/oder ereignisgesteuert gesendet. Befindet sich beispielsweise die anfragende Datenverarbeitungseinheit gemäß einer vorgegebenen Reihenfolge in der zweiten Ausführungseinheit und die empfangende Datenverarbeitungseinheit noch in der ersten Ausführungseinheit, so werden die bis zur nächsten gemeinsamen Ausführungseinheit, d. h. bis zur dritten Ausführungseinheit, noch nicht ausgeführten Verarbeitungsschritte ausgeführt, d. h. die erste und zweite Ausführungseinheit der empfangenden Datenverarbeitungseinheit wird noch bearbeitet. Die anfragende Datenverarbeitungseinheit befindet sich dabei im Wartemodus und sendet die Identifikationsnummer zyklisch, z. B. alle 2ms, bis die korrespondierende Ausführungseinheit anhand der zugehörigen Identifikationsnummer identifiziert wird und somit der gleiche Verarbeitungszustand auf beiden Datenverarbeitungseinheiten sichergestellt ist.

Zur Plausibilitätskontrolle wird nach Erfassung des gleichen Verarbeitungszustands zweckmäßigerweise eine Zugriffsbestätigungsanfrage an die andere Datenverarbeitungseinheit gesendet und ein Freigabesignal zum gemeinsamen Zugriff auf den Datenspeicher überwacht. Zur möglichst einfachen Implementierung des Synchronisationsalgorithmus in die Datenverarbeitung wird mittels der Synchronisationseinheit die Zugriffsbestätigungsanfrage getrennt vom Datenzugriff ausgeführt. Nach erfolgtem Zugriff auf die Daten wird vorzugsweise die Zugriffsbestätigungsanfrage zurückgesetzt.

Die zweitgenannte Aufgabe wird erfindungsgemäß gelöst durch ein Datenverarbeitungssystem mit mindestens zwei redundanten Datenverarbeitungseinheiten, die mittels einer Datenübertragungseinheit miteinander verbunden sind, wobei jede Datenverarbeitungseinheit zur Verarbeitung von Daten eine oder mehrere Ausführungseinheiten umfasst, denen zum Zugriff auf gleiche Daten eine Synchronisationseinheit zugeordnet ist, die jeweils in einen Synchronisationsbereich und einen gemeinsamen Speicherbereich unterteilt ist, wobei die Synchronisationseinheit anhand des Synchronisationsbereichs bei Zugriff einer der Ausführungseinheiten auf den gemeinsamen Speicherbereich zur Aussendung einer Zugriffsbestätigungsanfrage an die korrespondierende Ausführungseinheit der anderen Datenverarbeitungseinheit und zum Vergleich einer die anfragende Ausführungseinheit repräsentierenden Identifikationsnummer mit der Identifikationsnummer der empfangenden Ausführungseinheit der anderen Datenverarbeitungseinheit sowie zur Freigabe oder Sperrung des Zugriffs in Abhängigkeit vom Vergleichsergebnis vorgesehen ist.

Die mit der Erfindung erzielten Vorteile bestehen insbesondere darin, dass durch Implementierung einer Synchronisationseinheit mit einem zweistufigen Abfragezyklus zur sicheren Identifizierung des gleichen Verarbeitungszustandes beider Datenverarbeitungseinheiten anhand von die Ausführungseinheiten repräsentierenden Identifikationsnummern ein einfacher auf ein beliebiges Betriebssystem zu portierender Synchronisationsalgorithmus zur Synchronisation von identischen Applikationen oder Ausführungseinheiten auf voneinander unabhängigen Datenverarbeitungseinheiten hardwareunabhängig ermöglicht ist. Die hardware- und betriebssystemunabhängige Synchronisationseinheit kann somit sowohl von Applikationen und/oder Betriebssystemen und deren Anwendungen benutzt werden. Des Weiteren kann die Synchronisationseinheit auch am Übergang vom Betriebssystem zur Applikation (= Anwenderprogramm), ohne dass Änderungen am Betriebssystem erforderlich sind, eingesetzt werden. Je nach Art und Ausgestaltung des Vergleichs der Identifikationsnummern zur Identifizierung des Verarbeitungszustandes beider Datenverarbeitungseinheiten kann die Synchronisation von synchron ablaufenden und/oder asynchron ablaufenden Ausführungseinheiten (auch Tasks genannt) betriebs- und hardwareunabhängig ausgeführt werden. Zusammenfassend ist ein derartig aufgebautes Datenverarbeitungssystem hinsichtlich seiner Verfügbarkeit sowie seines Einsatzes als Automatisierungssystem in sicherheitsrelevanten Anlagen besonders wirtschaftlich und zeiteffektiv.

Ausführungsbeispiele der Erfindung werden anhand einer Zeichnung näher erläutert. Darin zeigen:
- FIG 2: schematisch ein redundantes Datenverarbeitungssystem mit zwei redundanten jeweils eine zugehörige Synchronisationseinheit umfassenden Datenverarbeitungseinheiten, und
- FIG 3: schematisch einen Algorithmus zur Synchronisation der Datenverarbeitung der zwei Datenverarbeitungseinheiten des redundanten Datenverarbeitungssystems.

Einander entsprechende Teile sind in beiden Figuren mit den gleichen Bezugszeichen versehen.

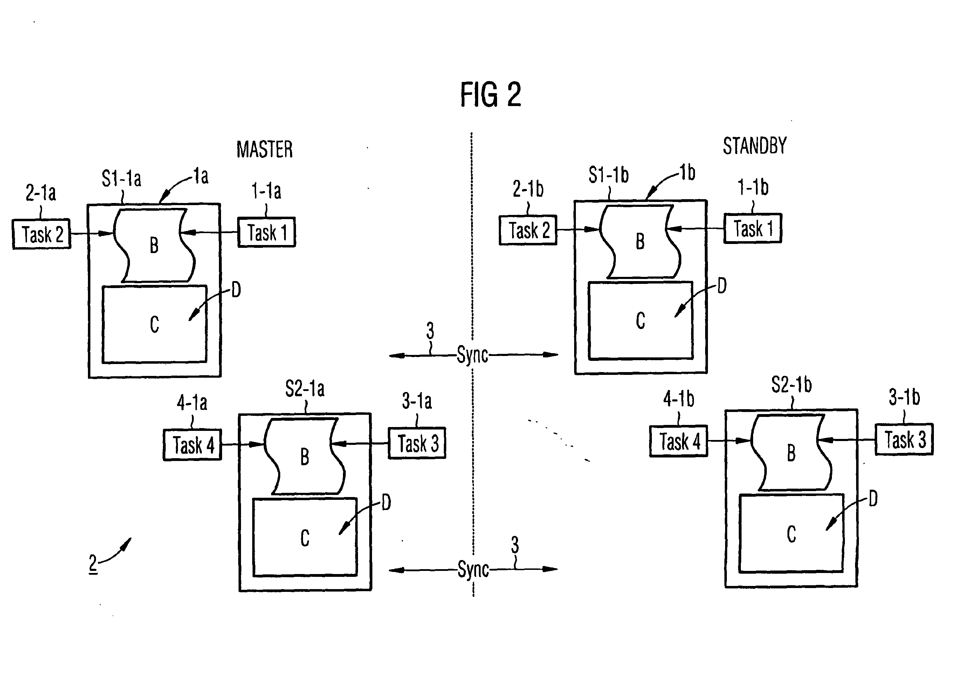

Die Figur 2 zeigt schematisch zwei redundante Datenverarbeitungseinheiten 1a und 1b eines Datenverarbeitungssystems 2. Die Datenverarbeitungseinheiten 1a und 1b sind mittels einer Datenübertragungseinheit 3 miteinander verbunden. Das Datenverarbeitungssystem 2 ist beispielsweise eine speicherprogrammierbare Steuerung oder ein vernetztes Computersystem. Je nach Art und Ausführung des Datenverarbeitungssystems 2 können die Datenverarbeitungseinheiten 1a, 1b und/oder die Datenübertragungseinheiten 3 redundant ausgeführt sein. In der Figur 2 ist eine einfache Redundanz dargestellt, die zwei redundant zueinander ausgebildete Datenverarbeitungseinheiten 1a, 1b aufweist. Je nach Sicherheitsanforderungen der mittels des Datenverarbeitungssystems 2 zu steuernden technischen Anlage kann auch eine Mehrfach-Redundanz, z. B. eine Dreifach-Redundanz, und/oder neben der so genannten Systemredundanz auch eine Medienredundanz vorgesehen sein. Die Datenübertragungseinheit 3 ist eine standardisierte Übertragungsleitung, z. B. ein Ethernet-Koaxialkabel, und weist ebenfalls standardisierte, nicht dargestellte Übertragungselemente wie Verstärker, Repeater oder Bridges auf.

Bei einem redundant ausgeführten Automatisierungs- oder Datenverarbeitungssystem 2 arbeitet im bestimmungsgemäßen Betrieb ein Automatisierungsgerät oder die Datenverarbeitungseinheit 1a als so genannter Master und ein weiteres Automatisierungsgerät oder die Datenverarbeitungseinheit 1b als so genannter Slave. Bedingt durch die bei einem redundanten System in mehreren Datenverarbeitungseinheiten 1a, 1b ablaufenden identischen Steuerungs- und/oder Regelungsfunktionen können gleichzeitig von mehreren Ausführungseinheiten 1-1a bis 4-1a bzw. 1-1b bis 4-1b Anforderungen zum Zugriff auf gleiche Daten D vorliegen. Mit anderen Worten: Zu Steuer- und Regelungszwecken und somit zur Automatisierung einer zu steuernden und/oder zu regelnden technischen Anlage, z. B. einer Fertigungsanlage, umfasst jede Datenverarbeitungseinheit 1a, 1b zur Verarbeitung von Daten D ein oder mehrere Ausführungseinheiten 1-1a bis n-1a bzw. 1-1b bis n-1b (kurz 1-1a/1b bis n-1a/1b genannt). Die Ausführungseinheiten 1-1a/1b bis n-1a/1b sind so genannte Task, die als Anwender- und/oder Systembausteine Prozess-Signale der technischen Anlage zur Generierung von Steuersignalen für die technische Anlage verarbeiten. Bei den Ausführungseinheiten 1-1a/1b bis n-1a/1b kann es sich um verschiedene Datenverarbeitungsprogramme handeln, welche sowohl einem Betriebssystem als auch einer Anwenderapplikation zugeordnet sind.

Im Beispiel nach Figur 2 umfasst das jeweilige auf den Datenverarbeitungseinheiten 1a und 1b identische Datenverarbeitungsprogramm vier identische Tasks oder vier identische Ausführungseinheiten 1-1a bis 4-1a und 1-1b bis 4-1b. Zur Identifizierung, welche der Ausführungseinheiten 1-1a/1b bis n-1a/1b auf welcher Datenverarbeitungseinheit 1a bzw. 1b ausgeführt wird, werden die Ausführungseinheiten 1-1a/1b bis n-1a/1b um den die zugehörige Datenverarbeitungseinheit 1a oder 1b kennzeichnenden Index 1a bzw. 1b ergänzt, d. h. die Datenverarbeitungseinheit 1a umfasst die Ausführungseinheiten 1-1a bis n-1a und die korrespondierende Datenverarbeitungseinheit 1b umfasst identische Ausführungseinheiten 1-1b bis n-1b.

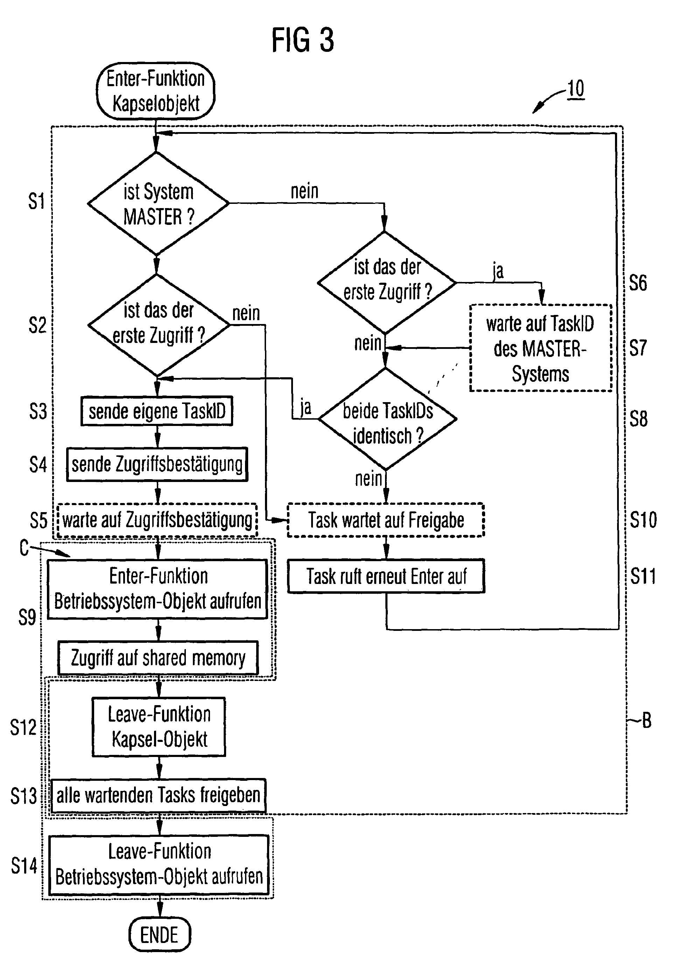

Zur Synchronisation der Datenverarbeitung der hardware- und softwareidentisch ausgebildeten Datenverarbeitungseinheiten 1a und 1b, insbesondere zum Zugriff der Ausführungseinheiten 1-1a bis 4-1a bzw. 1-1b bis 4-1b auf gleiche Daten D ist den betreffenden, d. h. gleiche Daten D verarbeitenden Ausführungseinheiten 1-1a und 2-1a bzw. 1-1b und 2-1b oder 3-1a und 4-1a bzw. 3-1b und 4-1b jeweils eine Synchronisationseinheit S1-1a und S1-1b bzw. S2-1a und S2-1b zugeordnet. Die jeweilige Synchronisationseinheit S1-1a, S2-1a und S1-1b, S2-1b der redundanten Datenverarbeitungseinheiten 1a bzw. 1b ist in einen Synchronisationsbereich B und einen Speicherbereich C für die Daten D unterteilt. Das mittels der betreffenden Synchronisationseinheit 1-1a oder 2-1a und der korrespondierenden Synchronisationseinheit 1-1b bzw. 2-1b ausgeführte Synchronisationsverfahren der Datenverarbeitung der beiden redundanten Datenverarbeitungseinheiten 1a und 1b wird anhand der Figur 3 näher beschrieben.

Das Synchronisationsverfahren kann dabei unabhängig von der Anzahl der Redundanzen sowie unabhängig von der zugrunde liegenden Hardware und Software und somit unabhängig vom Betriebssystem und/oder der Anwenderapplikation implementiert werden.

Zur Synchronisation der beiden Datenverarbeitungseinheiten 1a und 1b werden bei einem Zugriff von mehreren Ausführungseinheiten 1-1a/1b bis n-1a/1b denjenigen Ausführungseinheiten 1-1a und 2-1a oder 1-1b und 2-1b oder 3-1a und 4-1a oder 3-1b und 4-1b, welche auf einen gemeinsamen Speicherbereich C zugreifen, die gemeinsame Synchronisationseinheit S1-1a, S1-1b, S2-1a bzw. S2-1b zugeordnet.

Bei der Synchronisation ruft dann beispielsweise die betreffende Ausführungseinheit 1-1a und 2-1a bzw. 1-1b und 2-1b die betreffende Synchronisationseinheit S1-1a bzw. S1-1b auf. In der Figur 3 ist beispielhaft der Algorithmus für eine der Synchronisationseinheiten S1-1a bis S1-1b dargestellt. Dabei ist der in der Synchronisationseinheit S1-1a oder S1-1b ablaufende Algorithmus unabhängig von der jeweiligen Datenverarbeitungseinheit 1a bzw. 1b und unabhängig von der auf die Synchronisationseinheit S1-1a oder S1-1b zugreifenden Ausführungseinheit 1-1a, 2-1a bzw. 1-1b, 2-1b ausgebildet.

Dazu wird mittels der Synchronisationseinheit S1-1a oder S1-1b in einem ersten Schritt S1 identifiziert, ob es sich bei der anfragenden Datenverarbeitungseinheit 1a um eine Master-Einheit oder eine Standby-Einheit (auch Slave-Einheit genannt) handelt. Das heißt, es wird zunächst identifiziert, auf welchen der Datenverarbeitungseinheiten 1a bzw. 1b die betreffende Ausführungseinheit 1-1a/1b bis n-1a/1b (z. B. die Ausführungseinheit 1-1a oder 1-1b) abläuft.

Je nach Art der betreffenden und identifizierten Datenverarbeitungseinheit 1a, z. B. eine Master-Einheit, wird in einem zweiten Schritt S2 überprüft, ob beispielsweise die betreffende Ausführungseinheit 1-1a (auch Task 1 genannt), die erste in dieser Zugriffssequenz auf die gemeinsamen Daten D der Synchronisiereinheit 1-1a zugreifende Ausführungseinheit 1-1a bis n-1a ist. Falls ja, sendet die betreffende Ausführungseinheit 1-1a zunächst in einem Schritt S3 die zugehörige Identifikationsnummer I an die betreffende, insbesondere korrespondierende Ausführungseinheit 1-1b der anderen Datenverarbeitungseinheit 1b (= Standby-Einheit).

Die Identifikationsnummer I (auch task-ID) genannt, ist eine eindeutige, die jeweilige Ausführungseinheit 1-1a/1b bis n-1a/1b repräsentierende Kennung, wobei bevorzugt korrespondierende Ausführungseinheiten 1-1a und 1-1b oder 2-1a und 2-1b, etc. identische Identifikationsnummern I aufweisen. Mit anderen Worten: Den zu synchronisierenden Ausführungseinheiten 1-1a und 1-1b der beiden Datenverarbeitungseinheiten 1a bzw. 1b sind identische Identifikationsnummern I zugeordnet. Alternativ kann anstelle einer derartigen paarweisen Zuordnung von Identifikationsnummern I zu den korrespondierenden Ausführungseinheiten 1-1a und 1-1b eine zusätzliche Zuordnung anhand einer eindeutigen Kennung ausgeführt werden. Während der Bearbeitung der Synchronisationsfunktion mittels der Synchronisationseinheit S1-1a werden Zugriffe anderer Ausführungseinheiten, z. B. 3-1a oder 4-1a in einen so genannten Wartezustand versetzt.

In einem vierten Schritt S4 wird seitens der Synchronisationseinheit S1-1a eine Zugriffsbestätigungsanfrage ZB an die korrespondierende Synchronisationseinheit S1-1b der anderen Datenverarbeitungseinheit 1b (= Standby-Einheit) gesendet. In einem fünften Schritt S5 wartet die Synchronisiereinheit S1-1a auf den Empfang der Zugriffsbestätigungsanfrage ZB.

Je nach Art und Ausführung des Synchronisationsverfahrens wird auf der korrespondierenden Datenverarbeitungseinheit 1-1b (= Standby-Einheit) parallel oder zeitlich versetzt die korrespondierende Synchronisationseinheit S1-1b aufgerufen. Dabei ist nicht sichergestellt, dass der Zugriff auf die Synchronisationseinheit S1-1b durch die korrespondierende Ausführungseinheit 1-1b erfolgt. Um die beiden Datenverarbeitungseinheiten 1a und 1b zu synchronisieren, wird daher in einem Schritt S6 zunächst identifiziert, ob dies der erste Zugriff in der Zugriffssequenz ist. Wenn dies der erste Zugriff in dieser Zugriffssequenz ist, wartet die Synchronisationseinheit S1-1b in einem Schritt S7 auf den Empfang der Identifikationsnummer I der Ausführungseinheit 1-1a der Master-Einheit oder Datenverarbeitungseinheit 1a. Nach Empfang der Identifikationsnummer I oder bei dem nächstfolgenden Zugriff in der Zugriffssequenz wird in einem weiteren Schritt S8 die Identifikationsnummer I der zugreifenden Ausführungseinheit 1-1b mit der empfangenen bzw. zuvor empfangenen Identifikationsnummer I der korrespondierenden Ausführungseinheit 1-1a verglichen. Für den Fall, dass die Identifikationsnummern I gleich sind, werden analog zu den Schritten S3 bis S5 der Synchronisationseinheit S1-1a der Master-Einheit diese Schritte S3 bis S5 auch von der Synchronisationseinheit S1-1b der Standby-Einheit durchlaufen.

Nach Empfang der Zugriffsbestätigungsanfrage ZB entweder durch die Datenverarbeitungseinheit 1a oder durch die korrespondierende Datenverarbeitungseinheit 1b wird mittels der betreffenden Ausführungseinheit 1-1a bzw. 1-1b in einem Schritt S9 ein Zugriff auf den gemeinsamen Speicherbereich C ausgeführt.

Für den Fall, dass die beiden Identifikationsnummern I nicht übereinstimmen, wird in einem Schritt S10 die auf der Standby-Einheit oder der Datenverarbeitungseinheit 1b zugreifende Ausführungseinheit 3-1b bis n-1b in den Wartezustand versetzt. Das heißt, die Datenverarbeitung wird durch die betreffende Ausführungseinheit 3-1b bis n-1b in der Datenverarbeitungseinheit 1b ausgesetzt und unterbrochen. Eine andere Ausführungseinheit 1-1b bis 2-1b kann somit in einem Schritt S11 auf die Synchronisationseinheit S1-1b zugreifen. Dabei kann die nächste zugreifende Ausführungseinheit 1-1b bis n-1b vorgegeben werden, z. B. durch eine Systemsteuerung. Jede weitere Ausführungseinheit 1-1b bis n-1b durchläuft die gleiche Schrittsequenz von S1, S6 bis S8 sowie S10 bis S11, bis der Vergleich der Identifikationsnummern I im Schritt S8 zu einem positiven Ergebnis kommt. Dies bedeutet, dass auf beiden Datenverarbeitungseinheiten 1a und 1b paarweise identische oder korrespondierende Ausführungseinheiten 1-1a und 1-1b oder 2-1a und 2-1b auf den gemeinsamen Speicherbereich C zugreifen, so dass sich auf beiden Datenverarbeitungseinheiten 1a und 1b der Zustand durch den Zugriff in gleicher Art und Weise ändert. Das heißt, beide Datenverarbeitungseinheiten 1a und 1b arbeiten im Schritt S9 synchron.

Nach Beendigung des gemeinsamen Zugriffs der korrespondierenden Ausführungseinheiten 1-1a und 1-1b auf den gemeinsamen Speicherbereich C wird in einem Schritt S12 durch die betreffenden Ausführungseinheiten 1-1a und 1-1b der Zugriff auf die Synchronisationseinheit S1-1a bzw. S1-1b beendet, wodurch in einem Schritt S13 alle in den Warte- oder Ruhestand gesetzten Ausführungseinheiten 1-1a/1b bis n-1a/1b freigegeben werden und der Zugriff auf den gemeinsamen Speicherbereich C und die diesem Zugriff zugrunde liegende Funktion in einem Schritt S14 beendet wird.

Ein derartiger mittels einer gemeinsamen Synchronisationseinheit S1-1a bis Sn-1b ausgeführter Synchronisationsalgorithmus stellt sicher, dass jeder Zugriff auf einen gemeinsamen Speicherbereich C (= shared-memory-Bereich),auf beiden Datenverarbeitungseinheiten 1a und 1b in der gleichen Reihenfolge durch gleiche Ausführungseinheiten 1-1a/1b bis n-1a/1b (= tasks) erfolgt. Somit ist sichergestellt, dass die Anwendungen auf beiden Datenverarbeitungseinheiten 1a und 1b immer im gleichen Verarbeitungszustand sind und bleiben.

Zusammenfassend betrifft die Erfindung somit ein Verfahren zur Synchronisation der Datenverarbeitung in mindestens zwei redundanten Datenverarbeitungseinheiten 1a, 1b eines Datenverarbeitungssystems 2 und ein Datenverarbeitungssystem 2 mit einer Mehrzahl von Datenverarbeitungseinheiten 1a, 1b. Dabei werden die Daten D in der jeweiligen Datenverarbeitungseinheit 1a, 1b parallel mittels einer oder mehrerer Ausführungseinheiten 1-1a/1b bis n-1a/1b verarbeitet, wobei mehreren auf gleiche Daten D zugreifenden Ausführungseinheiten 1-1a/1b bis n-1a/1b eine Synchronisationseinheit S1-1a/1b bis Sn-1a/1b zugeordnet wird, welche in einen Synchronisationsbereich B und einen gemeinsamen Speicherbereich C unterteilt ist, wobei in einer der Datenverarbeitungseinheiten 1a, 1b die Daten D mittels einer der Ausführungseinheiten 1-1a/1b bis n-1a/1b in dem gemeinsamen Speicherbereich C derart aufgerufen werden, dass vor dem Zugriff der betreffenden Ausführungseinheit 1-1a/1b bis n-1a/1b auf den gemeinsamen Speicherbereich C mittels der zugehörigen Synchronisationseinheit S1-1a/1b bis Sn-1a/1b im Synchronisationsbereich B eine Zugriffsbestätigungsanfrage ZB an die korrespondierende Synchronisationseinheit S1-1a/1b bis Sn-1a/1b der anderen Datenverarbeitungseinheit 1a, 1b gesendet und anhand eines Vergleichs einer die anfragende Ausführungseinheit 1-1a/1b bis n-1a/1b repräsentierenden Identifikationsnummer I mit der Identifikationsnummer I der empfangenen Ausführungseinheit 1-1a/1b bis n-1a/1b der anderen Datenverarbeitungseinheit 1a, 1b der Zugriff freigegeben oder gesperrt wird.

## Patentansprüche

1. Verfahren zur Synchronisation der Datenverarbeitung in mindestens zwei redundanten Datenverarbeitungseinheiten (1a, 1b) eines Datenverarbeitungssystems (2), bei dem die Daten (D) in der jeweiligen Datenverarbeitungseinheit (1a, 1b) parallel mittels einer oder mehrerer Ausführungseinheiten (1-1a/1b bis n-1a/1b) verarbeitet werden, wobei mehreren auf gleiche Daten (D) zugreifenden Ausführungseinheiten (1-1a/1b bis n-1a/1b) eine Synchronisationseinheit (S1-1a/1b bis Sn-1a/1b) zugeordnet wird, welche in einen Synchronisationsbereich (B) und einen gemeinsamen Speicherbereich (C) unterteilt ist, wobei in einer der Datenverarbeitungseinheiten (1a, 1b) die Daten (D) mittels einer der Ausführungseinheiten (1-1a/1b bis n-1a/1b) in dem gemeinsamen Speicherbereich (C) derart aufgerufen werden, dass vor dem Zugriff der betreffenden Ausführungseinheit (1-1a/1b bis n-1a/1b) auf den gemeinsamen Speicherbereich (C) mittels der zugehörigen Synchronisationseinheit (S1-1a/1b bis Sn-1a/1b) im Synchronisationsbereich (B) eine Zugriffsbestätigungsanfrage (ZB) an die korrespondierende Synchronisationseinheit (S1-1a/1b bis Sn-1a/1b) der anderen Datenverarbeitungseinheit (1a, 1b) gesendet wird, **dadurch gekennzeichnet, dass** anhand eines Vergleichs einer die anfragende Ausführungseinheit (1-1a/1b bis n-1a/1b) repräsentierenden Identifikationsnummer (I) mit der Identifikationsnummer (I) der empfangenden Ausführungseinheit (1-1a/1b bis n-1a/1b) der anderen Datenverarbeitungseinheit (1a, 1b) der Zugriff freigegeben oder gesperrt wird.

2. Verfahren nach Anspruch 1,
**dadurch gekennzeichnet,**
**dass** die Identifikationsnummer (I) zeit- und/oder ereignisgesteuert gesendet wird.

3. Verfahren nach Anspruch 1 oder 2,
**dadurch gekennzeichnet ,**
**dass** nach Zugriff auf die Daten (D) die Zugriffsbestätigungsanfrage (ZB) zurückgesetzt wird.

4. Verfahren nach einem der Ansprüche 1 bis 3,
**dadurch gekennzeichnet ,**
**dass** mittels der Synchronisationseinheit (S1-1a/1b bis Sn-1a/1b) die Zugriffsbestätigungsanfrage (ZB) getrennt vom Datenzugriff ausgeführt wird.

5. Datenverarbeitungssystem (2) mit mindestens zwei redundanten einer Datenverarbeitungseinheiten (1a, 1b), die mittels einer Datenübertragungseinheit (3) miteinander verbunden sind, wobei jede Datenverarbeitungseinheit (1a, 1b) zur Verarbeitung von Daten (D) eine oder mehrere Ausführungseinheiten (1-1a/1b bis n-1a/1b) umfasst, denen zum Zugriff auf gleiche Daten (D) eine Synchronisationseinheit (S1-1a/1b bis Sn-1a/1b) zugeordnet ist, die jeweils in einen Synchronisationsbereich (B) und einen gemeinsamen Speicherbereich (C) unterteilt ist, wobei die Synchronisationseinheit (S1-1a/1b bis Sn-1a/1b) anhand des Synchronisationsbereichs (B) bei Zugriff einer der Ausführungseinheiten (1-1a/1b bis n-1a/1b) auf den gemeinsamen Speicherbereich (C) zur Aussendung einer Zugriffsbestätigungsanfrage (ZB) an die korrespondierende Synchronisationseinheit (S1-1a/1b bis Sn-1a/1b) der anderen Datenverarbeitungseinheit (1a, 1b) vorgesehen ist, **dadurch gekennzeichnet, dass** die Synchronisationseinheit zum Vergleich einer die anfragende Ausführungseinheit (1-1a/1b bis n-1a/1b) repräsentierenden Identifikationsnummer (I) mit der Identifikationsnummer (I) der empfangenden Ausführungseinheit (1-1a/1b bis n-1a/1b) der anderen Datenverarbeitungseinheit (1a, 1b) sowie zur Freigabe oder Sperrung des Zugriffs in Abhängigkeit vom Vergleichsergebnis vorgesehen ist.

## Claims

1. Method for synchronising data processing in at least two redundant data processing units (1a, 1b) of a data processing system (2), with which the data (D) is processed in the respective data processing unit (1a, 1b) in a parallel manner by means of one or more execution units (1-1a/1b to n-1a/1b), with a synchronisation unit (S1-1a/1b to Sn-1a/1b) being assigned to a number of execution units (1-1a/1b to n-1a/1b) accessing the same data (D), said synchronisation unit (S1-1a/1b to Sn-1a/1b) being divided into a synchronisation area (B) and a shared memory area (C), with the data (D) being called in the shared memory area (C) in one of the data processing units (1a, 1b) by means of one of the execution units (1-1a/1b to n-1a/1b), such that before the execution unit (1-1a/1b to n-1a/1b) in question accesses the shared memory area (C), the associated synchronisation unit (S1-1a/1b to Sn-1a/1b) in the synchronisation area (B) sends an access confirmation request (ZB) to the corresponding synchronisation unit (S1-1a/1b to Sn-1a/1b) of the other data processing unit (1a, 1b), **characterised in that** access is released or blocked based on a comparison of an identification number (I) representing the requesting execution unit (1-1a/1b to n-1a/1b) with the identification number (I) of the receiving execution unit (1-1a/1b to n-1a/1b) of the other data processing unit (1a, 1b).

2. Method according to claim 1,
**characterised in that** the identification number (I) is sent in a time-controlled and/or event-controlled manner.

3. Method according to claim 1 or 2,
**characterized in that** once the data (D) has been accessed, the access confirmation request (ZB) is reset.

4. Method according to one of claims 1 to 3,
**characterized in that** the access confirmation request (ZB) is executed separately from data access by means of the synchronisation unit (S1-1a/1b to Sn-1a/1b).

5. Data processing system (2) with at least two redundant data processing units (1a, 1b), which are connected together by means of a data transmission unit (3), with each data processing unit (1a, 1b) having one or more execution units (1-1a/1b to n-1a/1b) for processing data (D), to which a synchronisation unit (S1-1a/1b to Sn-1a/1b) is assigned for access to the same data (D), each synchronisation unit (S1-1a/1b to Sn-1a/1b) being divided into a synchronisation area (B) and a shared memory area (C), with the synchronisation unit (S1-1a/1b to Sn-1a/1b) being provided based on the synchronisation area (B) in the event of access by one of the execution units (1-1a/1b to n-1a/1b) to the shared memory area (C) to output an access confirmation request (ZB) to the corresponding synchronisation unit (S1-1a/1b to Sn-1a/1b) of the other data processing unit (1a, 1b), **characterised in that** the synchronisation unit is provided to compare an identification number (I) representing the requesting execution unit (1-1a/1b to n-1a/1b) with the identification number (I) of the receiving execution unit (1-1a/1b to n-1a/1b) of the other data processing unit (1a, 1b) and to release or block access as a function of the result of the comparison.

## Revendications

1. Procédé pour la synchronisation du traitement de données dans au moins deux unités de traitement de données redondantes (1a, 1b) d'un système de traitement de données (2), dans lequel les données (D) sont traitées dans chaque unité de traitement de données respective (1a, 1b) en parallèle au moyen d'une ou plusieurs unités d'exécution (1-1a/1b à n-1a/1b), une unité de synchronisation (S1-1a/1b à Sn-1a/1b) étant associée à plusieurs unités d'exécution (1-1a/1b à n-1a/1b) qui accèdent à des données (D) identiques, laquelle unité de synchronisation est divisée en une zone de synchronisation (B) et une zone de mémoire commune (C), dans l'une des unités de traitement de données (1a, 1b), les données (D) étant appelées au moyen de l'une des unités d'exécution (1-1a/1b à n-1a/1b) dans la zone de mémoire commune (C) de telle sorte que, avant l'accès de l'unité d'exécution concernée (1-1a/1b à n-1a/1b) à la zone de mémoire commune (C), une demande de confirmation d'accès (ZB) est envoyée à l'unité de synchronisation correspondante (S1-1a/1b à Sn-1a/1b) de l'autre unité de traitement de données (1a, 1b) au moyen de l'unité de synchronisation associée (S1-1a/1b à Sn-1a/1b) dans la zone de synchronisation (B), **caractérisé par le fait que**, à l'aide d'une comparaison d'un numéro d'identification (I) représentant l'unité d'exécution demandeuse (1-1a/1b à n-1a/1b) au numéro d'identification (I) de l'unité d'exécution réceptrice (1-1a/1b à n-1a/1b) de l'autre unité de traitement de données (1a, 1b), l'accès est autorisé ou bloqué.

2. Procédé selon la revendication 1,
**caractérisé par le fait que** le numéro d'identification (I) est envoyé suivant une commande par le temps et/ou par un événement.

3. Procédé selon la revendication 1 ou 2,
**caractérisé par le fait que**, après un accès aux données (D), la demande de confirmation d'accès (ZB) est annulée.

4. Procédé selon l'une des revendications 1 à 3,
**caractérisé par le fait que**, au moyen de l'unité de synchronisation (S1-1a/1b à Sn-1a/1b), la demande de confirmation d'accès (ZB) est exécutée séparément de l'accès aux données.

5. Système de traitement de données (2) comportant au moins deux unités de traitement de données redondantes (1a, 1b) qui sont reliées au moyen d'une unité de transmission de données (3), chaque unité de traitement de données (1a, 1b) comprenant pour le traitement de données (D) une ou plusieurs unités d'exécution (1-1a/1b à n-1a/1b) auxquelles il est associé pour l'accès aux mêmes données (D) une unité de synchronisation (S1-1a/1b à Sn-1a/1b) qui est divisée à chaque fois en une zone de synchronisation (B) et une zone de mémoire commune (C), l'unité de synchronisation (S1-1a/1b à Sn-1a/1b) étant prévue pour, à l'aide de la zone de synchronisation (B) lors de l'accès de l'une des unités d'exécution (1-1a/1b à n-1a/1b) à la zone de mémoire commune (C), envoyer une demande de confirmation d'accès (ZB) à l'unité de synchronisation correspondante (S1-1a/1b à Sn-1a/1b) de l'autre unité de traitement de données (1a, 1b), **caractérisé par le fait que** l'unité de synchronisation est prévue pour comparer un numéro d'identification (I) représentant l'unité d'exécution demandeuse (1-1a/1b à n-1a/1b) au numéro d'identification (I) de l'unité d'exécution réceptrice (1-1a/1b à n-1a/1b) de l'autre unité de traitement de données (1a, 1b) et pour autoriser ou bloquer l'accès en fonction du résultat de la comparaison.
